# EUROPÄISCHE PATENTSCHRIFT

(11) **EP 2 997 292 B1**
(45) Veröffentlichungstag und Bekanntmachung des Hinweises auf die Patenterteilung: **17.05.2017**
(21) Anmeldenummer: 14702748.6
(22) Anmeldetag: 01.02.2014
(51) Int. Cl.: B65B 31/02, F16L 59/065

(54) **VERFAHREN ZUR HERSTELLUNG EINES VAKUUMISOLATIONSKÖRPERS**
METHOD FOR PRODUCING A VACUUM INSULATING BODY
PROCÉDÉ DE FABRICATION D'UN CORPS D'ISOLATION SOUS VIDE

(30) Priorität: 15.05.2013 DE 102013008263
(43) Veröffentlichungstag der Anmeldung: 23.03.2016
(73) Patentinhaber: va-Q-tec AG, 97080 Würzburg (DE)
(72) Erfinder: KUHN, Joachim, 97074 Würzburg (DE); CAPS, Roland, 63839 Kleinwallstadt (DE)
(74) Vertreter: Von Rohr Patentanwälte Partnerschaft mbB
(86) Internationale Anmeldenummer: PCT/EP2014/000265
(87) Internationale Veröffentlichungsnummer: WO 2014/183814

(56) Entgegenhaltungen:
- WO-A1-03/072684
- WO-A1-2007/033836
- DE-A1-102009 024 484

## Beschreibung

Die Erfindung betrifft ein Verfahren zur Herstellung eines Vakuumisolationskörpers (Vakuumisolationspaneel; VIP).

Evakuierte Dämmmaterialien erreichen Wärmeieitfähigkeiten, die um den Faktor 5 bis 20 geringer sind als die von belüfteten, konventionellen Dämmstoffen. Es lassen sich damit kompakte, starkdämmende Transportbehälter für temperatursensitive Güter, stark gedämmte Kühl- und Gefriergeräte oder schlanke Dämmaufbauten im Gebäudebereich herstellen. Derartige evakuierte Dämmkörper bezeichnet man typischerweise als Vakuumisolationskörper oder auch, wenn sie in Plattenform vorliegen, als Vakuumisolationspaneele, kurz VIP. Dieser Begriff wird nachfolgend für diese Vakuumisolationskörper verwendet.

Für den Kern der Vakuumisolationskörper eignen sich druckbelastbare Materialien in der Form von Pulverplatten, Pulverschüttungen, offenporigen Schäumen oder Glasfasermaterialien. Insbesondere Dämmkerne aus Pulverplatten oder losem Pulver werden gewöhnlich noch zur Minderung der Staubbildung mit einem luftdurchlässigen Polyestervlies umhüllt. Damit soll verhindert werden, dass beim Evakuiervorgang in einer Vakuumkammer Staub frei wird und Siegelnähte an Verbindungsrändern und/oder die Vakuumkammer verschmutzt werden.

VIPs mit einer Füllung aus pyrogenem Kieselsäurepulver weisen eine feine Porenstruktur auf und lassen relativ hohe Gasdrücke zu, ohne dass die Wärmeleitfähigkeit des Restgases eine Rolle spielt. So ist bei diesen mikroporösen Materialien nur ein Vakuum von 1 bis 10 mbar notwendig, um die Wärmeleitfähigkeit auf 0,003 bis 0,005 W/mK zu bringen. Umhüllungen aus speziellen vakuumdichten Folien, sogenannten Hochbarrierefolien, die nur eine hauchdünne, aufgedampfte Beschichtung aus Aluminium aufweisen, stellen sicher, dass der Gasdruck im Kernmaterial nur mit etwa 1 mbar pro Jahr ansteigt. Allerdings bedingen die bisherigen Herstellungsprozesse von VIPs mit Pulverfüllung einen relativ hohen Aufwand und lassen sich nicht vollständig automatisieren.

Aus dem Stand der Technik bekannt (WO 03/072684 A1) ist ein VIP, bei dem die Befüllung über einen Einfüllstutzen aus Kunststoff erfolgt, der im Anschluss an die Befüllung mit einem Stopfen verschlossen wird. Bei anderem Stand der Technik (DE 10 2009 024 484 A1) wird das pyrogene Kieselsäurepulver vorweg hochdicht verfestigt und in Plattenform gepresst. Erst im Anschluss daran wird die Platte in Hochbarrierefolien eingehüllt.

Das Verfahren zur Herstellung eines VIP, von dem die Erfindung ausgeht, ist aus der EP 1 926 931 B1 mit folgenden Verfahrensschritten bekannt: Zunächst wird ein Pulver in einen einseitig offenen Beutel aus Hochbarrierefolien eingefüllt. Anschließend wird ein für Luft durchlässiges, aber für das Pulver nicht durchlässiges flächiges Filtermaterial in der Nähe der Öffnung an der Innenseite des Folienbeutels derart befestigt, dass das Beutelinnere staubdicht abgeschlossen ist, jedoch Luft austreten kann. Danach wird der Innenraum evakuiert und schließlich der Beutel im evakuierten Zustand verschlossen. Die feinen Pulverteilchen werden bei der Evakuierung im Beutel auch bei hohen Gasströmen durch das in der Beutelöffnung angebrachte Filtermaterial vollständig zurückgehalten, so dass die Vakuumkammer und die Siegelnähte an den Verbindungsränderh nicht verschmutzt werden.

Bei dem bekannten Verfahren wird das Pulver über die Befüllungsöffnung des leeren Beutels mit Hilfe eines Befüllrohrs durch Schwerkraftwirkung in das Innere des Beutels fallen gelassen. Beim Zurückziehen des Befüllrohres kann es zu einer Verschmutzung der Siegelflächen mit Pulver kommen, so dass die anschließende Versiegelung der verbliebenen Öffnung mit, insbesondere mit dem Filtervlies, bzw. alternativ mit der Hochbarrierefolie undicht sein kann.

Der Lehre liegt das Problem zugrunde, das bekannte Verfahren zur Herstellung eines Vakuumisolationskörpers so zu verbessern, dass eine Verschmutzung der Siegelnähte an den Verbindungsrändern durch pulverartiges Füllmaterial sicher vermieden wird.

Das erfindungsgemäße Verfahren zur Herstellung eines Vakuumisolationskörpers (Vakuumisolationspaneel; VIP) hat gemäß Anspruch 1 folgende Verfahrensschritte:
a) Eine vakuumdichte Folie oder Folienverbindung wird bereitgestellt.
b) Ein für Luft durchlässiges, aber für ein pulverartiges Füllmaterial nicht durchlässiges flächiges Filtermaterial wird bereitgestellt.
c) Das flächige Filtermaterial wird mit der Folie oder Folienverbindung randseitig derart fest verbunden, dass der Verbindungsrand zwischen dem flächigen Filtermaterial und der vakuumdichten Folie oder Folienverbindung jedenfalls für das pulverartige Füllmaterial nicht durchlässig ist.
d) Die vakuumdichte Folie oder Folienverbindung einerseits und das flächige Filtermaterial andererseits werden so angeordnet, dass sich dazwischen ein mit Füllmaterial füllbarer, nach außen abgeschlossener Aufnahmeraum ergibt.
e) Das flächige Filtermaterial wird mittels eines Einfüllelements einer Füllvorrichtung für das pulverartige Füllmaterial durchsetzt.
f) Bei hohem Umgebungsdruck, insbesondere also bei normalem Atmosphärendruck, wird eine gewünschte Menge an pulverartigem Füllmaterial durch das Einfüllelement vorzugsweise unter einem gegenüber dem Umgebungsdruck höheren Einfülldruck in den Aufnahmeraum eingefüllt.
g) Nach Abschluss des Befüllens des Aufnahmeraums wird das Einfüllelement aus dem flächigen Filtermaterial entfernt und das flächige Filtermaterial an der betroffenen Stelle wieder geschlossen.
h) Der Verbund aus der Folie oder Folienverbindung und dem flächigen Filtermaterial sowie dem im Aufnahmeraum befindlichen Füllmaterial wird insgesamt auf einen gegenüber dem Umgebungsdruck im Verfahrensschritt f) erheblich niedrigeren Druck (Vakuum) gebracht und dabei werden der Aufnahmeraum und das darin befindliche pulverartige Füllmaterial durch das flächige Filtermaterial hindurch entlüftet.
i) Bei weiterhin anhaltendem Vakuum wird die vakuumdichte Folie bzw. Folienverbindung komplett randseitig umlaufend derart fest verschlossen, dass dieser Verbindungsrand für Luft nicht durchlässig und so der Aufnahmeraum insgesamt luftdicht verschlossen ist.

Mit dem erfindungsgemäßen Verfahren lässt sich eine sackähnlich geformte Ausgestaltung des Verbundes aus erster vakuumdichter Folie und flächigem Filtermaterial erreichen, deren Aufnahmeraum durch das flächige Filtermaterial hindurch mittels des Einfüllelementes befüllt wird. Nach dem Entfernen des Einfüllelementes wird das flächige Filtermaterial an der betroffenen Stelle wieder geschlossen. Das resultierende Produkt ist komplett staubdicht verschlossen.

Bevorzugte Ausgestaltungen und Weiterbildungen des erfindungsgemäßen Verfahrens sind Gegenstand der Unteransprüche.

Als Pulverfüllung eignen sich bspw. mikroporöse Kieselsäurepulver, insbesondere aus pyrogener oder gefällter Kieselsäure, Perlitpulver, insbesondere auch aus geblähten oder gemahlenen Perliten, Nano- und Mikro-Kunststoffpulver, Pulver aus zermahlenen offenporigen organischen Schäumen, schüttbare Glasfasermaterialien mit kurzen Faserlängen, Aerogele oder sonstige Nanostrukture sowie Platten aus gepressten Pulvern, wobei ein Anteil von bis zu 80% aus Recyclingmaterial bestehen kann. Im allgemeinen ist diesen Pulvern noch ein Trübungsmittel zur Verringerung des Wärmestrahlungsdurchgangs zugemischt in einem Verhältnis von 2 bis 50 %, insbesondere aber von 15 bis 50%. Trübungsmittel können dabei beispielsweise Ruß, Graphit, Titandioxod, SiC oder Eisenoxid sein.

Bevorzugt wird ein flächiges Filtermaterial aus einem einlagigen oder mehrlagigen Vliesmaterial verwendet, beispielsweise einem Polyestervlies. Dieses ist mit einer Polyethylen-Siegelschicht am Verbindungsrand der ersten vakuumdichten Folie unter dem Einfluss von Wärme staubdicht verbindbar, insbesondere verklebbar.

Vorzugsweise wird ein Vlies mit einem Flächengewicht von 20 bis 60 g/m² eingesetzt, wobei das gesamte Flächengewicht der Vliesstoffe zwischen 20 und 120 g/m² liegt.

Besonders bevorzugt ist es, dass als flächiges Filtermaterial ein solches luftdurchlässiges Material verwendet wird, das sich nach Entfernen des Einfüllelements von selbst wieder so verschließt, dass es auch an der betroffenen Stelle für das Füllmaterial nicht durchlässig ist. Auch für diese Funktion ist ein Vliesmaterial, einlagig oder mehrlagig, besonders zweckmäßig einsetzbar. Alternativ kann man aber auch vorsehen, dass das flächige Filtermaterial oder der Verbindungsrand zwischen dem flächigen Filtermaterial und der Folie oder Folienverbindung mit einem sich selbst verschließenden Ventil versehen wird und das Durchsetzen des flächigen Filtermaterials im Verfahrensschritt e) mittels des Ventils bzw. durch das Ventil hindurch erfolgt.

Für die Gestaltung des Einfüllelementes gibt es verschiedene Möglichkeiten. Besonders bevorzugt lässt sich ein Einfüllrohr, vorzugsweise ein solches aus Metall verwenden, durch das das pulverartige Füllmaterial in den Aufnahmeraum hineingeblasen werden kann.

Grundsätzlich ist es möglich, die vakuumdichte Folie oder Folienverbindung einerseits und/oder das flächige Filtermaterial andererseits bereits jeweils in einer für das herzustellende Vakuumisolationspaneel passenden Größe bereitzustellen. Vorzugsweise allerdings werden die vakuumdichte Folie oder Folienverbindung einerseits und/oder das flächige Filtermaterial andererseits jeweils als Rollenware bereitgestellt und werden dann im Verfahren kontinuierlich verarbeitet.

Für das Verschließen des Produkts im Verfahrensschritt i) kann man eine zweite vakuumdichte Folie oder Folienverbindung einsetzen, die mit der ersten vakuumdichten Folie oder Folienverbindung dann an dem Verbindungsrand luftundurchlässig verbunden wird. Alternativ ist es auch möglich, den durch die erste vakuumdichte Folie oder Folienverbindung gebildeten Beutel einfach an seiner offenen Seite zu verschließen, also die vakuumdichte Folie oder Folienverbindung mit sich selbst luftundurchlässig zu verbinden, um so den Aufnahmeraum insgesamt luftdicht zu verschließen.

Das Pulver kann aus Vorratsbehältern wie Silos oder Big Bags zugeführt werden und danach eine Prozessstrecke sowie gegebenenfalls eine Misch- und/oder Heizstrecke durchlaufen.

Um ein gutes Fließen des pulvrigen Füllmaterials durch den Injektor zu ermöglichen, kann das Fließen durch eine Druckbeaufschlagung verbessert werden. Eine Fluidisierung des Schüttgutes kann dadurch erreicht werden, dass dem Schüttgut vorzugsweise unmittelbar vor dem Einführen in den Injektor Luft oder ein anderes Prozessgas zugeführt wird. Das bedeutet, dass das Schüttgut in einer ersten Dichte im Vorratsbehälter vorliegt, die Dichte dann auf eine zweite Dichte während des Füllprozesses verringert wird und schließlich beim Evakuieren auf eine dritte Dichte erhöht wird, die vorzugsweise zumindest 30% über der ersten Dichte liegt.

Die Folienlagen können mindestens am Rand des Flächengebildes umlaufend verbunden, vorzugsweise thermisch verschweißt werden. Dies ist insbesondere dann ausreichend, wenn ein einstückiges VIP hergestellt werden soll. Vorzugsweise können jedoch auch weitere Verschweißungen innerhalb der äußeren Verschweißung vorliegen, beispielsweise dann, wenn innerhalb eines Foliengebildes mehrere VIPs gleichzeitig hergestellt werden sollen.

Die Verschweißung der Lagen kann auf grundsätzlich beliebige Weise erfolgen.

In einem ersten bevorzugten Verfahrensablauf, der insbesondere bei dem oben angesprochene Polyestervlies als flächiges Filtermaterial in Frage kommt, empfiehlt es sich, dass der Verbindungsrand im Verfahrensschritt c) ein wenig nach innen vom Außenrand der Folie oder Folienverbindung beabstandet hergestellt wird und dass der Verbindungsrand im Verfahrensschritt i) zumindest zu einem Teil außerhalb des im Verfahrensschritt c) hergestellten Verbindungsrandes hergestellt wird. Dadurch liegen praktisch die in den Verfahrensschritten c) und i) hergestellten Verbindungsränder nebeneinander.

Bei anderen dicht verschweißbaren flächigen Filtermaterialen kann man aber alternativ auch vorsehen, dass der Verbindungsrand im Verfahrensschritt i) auf dem im Verfahrensschritt c) hergestellten Verbindungsrand hergestellt wird.

Hier erfolgt die Siegelung im Verfahrensschritt i) auf dem Verbindungsrand, der im Verfahrensschritt c) bereits hergestellt worden ist. Diese Verfahrensweise lässt sich z.B. mit PP- oder PE-Vliesmaterial durchführen.

Zur Herstellung der Verbindungsränder, insbesondere des Verbindungsrandes im Verfahrensschritt i), kommt ein Freiform-Siegelwerkzeug oder ein gesteuertes, punktuelles Siegelwerkzeug in Frage, also beispielsweise ein Schweißbalken mit Impulssiegelung.

Sämtliche Siegelnähte können grundsätzlich gleichzeitig gebildet werden. Vorzugsweise jedoch werden zwei, drei oder mehrere Siegelnähte zeitlich nacheinander während des Prozesses gesetzt. Dies ist insbesondere dann der Fall, wenn mehrere VIPs gleichzeitig in einem Foliengebilde hergestellt werden sollen. Dann können in einem ersten Siegelungsprozess die das gesamte Foliengebilde umlaufenden Siegelnähte gebildet werden, die dann also nicht Endnähte sind, und in einem weiteren Siegelungsprozess die Siegelnähte, die die einzelnen VIPs voneinander trennen, die dann also Endnähte sind.

Das Pulver, insbesondere das Kieselsäurepulver kann mit einer Ausgangsdichte von 60 bis 120 kg/m³ in den Prozess eingebracht werden, beispielsweise der Dichte im Silo oder Big Bag, die dann im Prozess zunächst weiter erniedrigt und schließlich im Prozess im Vakuumisolationskörper auf die Enddichte gebracht wird, die mindestens 30% über der Ausgangsdichte liegt.

Mit dem erfindungsgemäßen Verfahren läuft dieser Prozess so ab, dass das pulverartige Füllmaterial in einem Vorratssilo oder großen Vorratsbeutel in einer ersten, mittleren Dichte vorliegt, während des Einfüllens in den Aufnahmeraum in eine zweite, niedrigere Dichte gebracht wird und nach dem Einfüllen in den Aufnahmeraum durch Evakuieren und/oder durch mechanisches Zusammenpressen auf eine erheblich über der ersten Dichte liegende dritte Dichte komprimiert wird. Bevorzugt ist es dabei, dass die zweite Dichte etwa ¾ bis ¼ der ersten Dichte, vorzugsweise etwa ½ der ersten Dichte, beträgt.

Die Evakuierung kann auf grundsätzlich beliebige Weise erfolgen. Vorzugsweise jedoch erfolgt die Evakuierung in einem zweistufigen Prozess mit Anlegen eines Grobvakuums und anschließend Feinvakuum. Dabei findet die Evakuierung vorzugsweise in einer Vakuumkammer statt.

Nach dem Einfüllen des Pulvers in den Aufnahmeraum kann eine Pressung des Pulvers erfolgen. Dabei kann die Pressung vor, während und/oder nach dem Evakuieren erfolgen.

Im Folgenden wird die Erfindung nun anhand einer lediglich bevorzugte Ausführungsbeispiele darstellenden Zeichnung näher erläutert. Bei dieser Erläuterung werden auch bevorzugte Ausgestaltungsmöglichkeiten mit beschrieben. In der Zeichnung zeigt
- Fig. 1: in perspektivischer Ansicht, stark schematisch vereinfacht, einen ersten Schritt beim Füllen des Aufnahmeraums eines Vakuumisolationskörpers,
- Fig. 2: in einer Fig. 1 entsprechenden Darstellung den von der vakuumdichten Folie gebildeten Behälter vollständig gefüllt,
- Fig. 3: den Behälter aus Fig. 2 in einer Vakuumkammer,
- Fig. 4: den Behälter aus Fig. 2 in einer Vakuumkammer, evakuiert und gepresst,
- Fig. 5: ein weiteres Ausführungsbeispiel eines entsprechenden Behälters in einer Vakuumkammer.

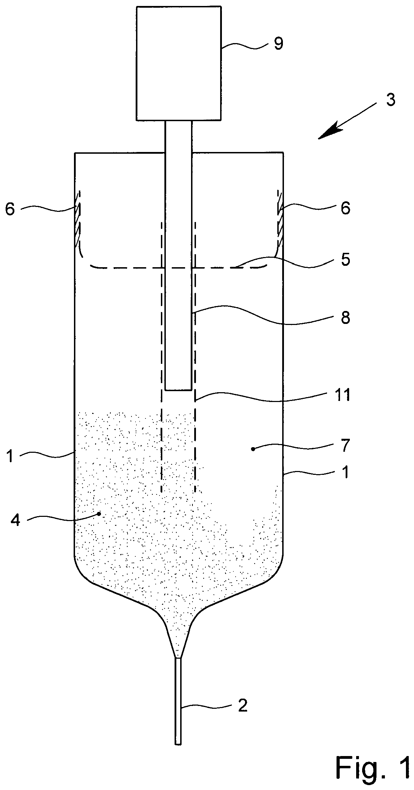

Anhand von Fig. 1 kann man nachvollziehen, wie die ersten Schritte eines erfindungsgemäßen Verfahrens zur Herstellung eines Vakuumisolationskörpers (Vakuumisolationspaneel; VIP) ablaufen.

Eine erste vakuumdichte Folie 1 oder Folienverbindung, also eine mehrlagige und/oder beschichtete Folie, wird bereitgestellt. Im dargestellten Ausführungsbeispiel ist diese Folie 1 als solche eine schlauchartige Hochbarrierefolie, bei der es sich z.B. um eine hauchdünne mit Aluminium beschichtete Kunststofffolie handelt. Diese kann auch mehrlagig ausgeführt sein. Diese ist am unteren Ende des Schlauches bereits mit einer Verschweißung 2 vakuumdicht geschlossen. Dadurch bildet die schlauchartige vakuumdichte Folie 1 eine Art Beutel, der nach oben offen ist. Insgesamt ist dieser Beutel aus der vakuumdichten Folie 1 der Ausgangszustand des VIP 3.

Fig. 1 zeigt ferner ein für Luft durchlässiges, aber für ein pulverartiges Füllmaterial 4 nicht durchlässiges flächiges Filtermaterial 5, dort gestrichelt dargestellt. Dieses flächige Filtermaterial 5 ist mit der Folie 1 oder Folienverbindung randseitig derart fest verbunden worden, dass der Verbindungsrand 6 zwischen dem flächigen Filtermaterial 5 und der vakuumdichten Folie 1 oder Folienverbindung jedenfalls für das pulverartige Füllmaterial, vorzugsweise durch die besondere Art des Verbindens auch für Luft, nicht durchlässig ist. Wie eine solche dauerhafte Verbindung hergestellt wird, ist im allgemeinen Teil der Beschreibung ausführlich beschrieben worden. Insbesondere kommt ein thermisches Verschweißen, ein Ultraschallverschweißen und/oder ein Kleben in Frage.

Man erkennt in Fig. 1, dass der Verbund aus der vakuumdichten Folie 1 und dem flächigen Filtermaterial 5 so angeordnet ist, dass sich dazwischen ein mit mit dem pulverartigen Füllmaterial 4 befüllbarer, jedoch nach außen abgeschlossener Aufnahmeraum 7 ergibt. In Fig. 1 ist ein Teil des pulverartigen Füllmaterials 4 bereits in den Aufnahmeraum 7 eingefüllt worden, der restliche Aufnahmeraum 7 ist noch leer. Die beim Befüllen des Aufnahmeraums 7 verdrängte Luft kann durch das flächige Filtermaterial 5 hindurch nach oben entweichen. Mitgerissenes pulverartiges Füllmaterial 4 wird aber von dem Filtermaterial 5 im Aufnahmeraum 7 zurückgehalten.

Fig. 1 macht ferner deutlich, wie das pulverartige Füllmaterial 4 in den Aufnahmeraum 7 eingebracht wird. Es wird nicht vor Anbringen des flächigen Filtermaterials 5 eingebracht, sondern nach dem Anbringen des flächigen Filtermaterials 5 an der vakuumdichten Folie 1 oder Folienverbindung. Dazu dient ein Einfüllelement 8 einer Füllvorrichtung 9, das das flächige Filtermaterial 5 durchsetzt.

Fig. 1 zeigt den Zustand bei hohem Umgebungsdruck, insbesondere also bei normalem Atmosphärendruck. Unter diesen Randbedingungen wird eine gewünschte Menge an pulverartigem Füllmaterial 4 durch das Einfüllelement 8 unter einem gegenüber dem Umgebungsdruck (etwas) höheren Einfülldruck in den Aufnahmeraum 7 eingefüllt. Grundsätzlich ist auch ein Einfüllen bei Umgebungsdruck möglich. Das dauert aber länger und ist insbesondere bei leichtem Füllmaterial 4 nicht so wirkungsvoll.

Ist der Aufnahmeraum 7 in der gewünschten Weise mit dem pulverartigen Füllmaterial 4 in entsprechender Menge gefüllt worden, so wird der Füllvorgang abgeschlossen. Das Einfüllelement 8 wird aus dem flächigen Filtermaterial 5 entfernt und das flächige Filtermaterial 5 wird an der betroffenen Stelle des Durchtritts wieder geschlossen.

Grundsätzlich ist es möglich, das flächige Filtermaterial 5 an der betroffenen Stelle durch Fremdeinwirkung, vorzugsweise von außen, wieder zu verschließen. Das birgt aber stets die Gefahr, dass sich doch pulverartiges Füllmaterial 4 nach außen verirrt. Demzufolge ist nach bevorzugter Lehre der Erfindung vorgesehen, dass als flächiges Filtermaterial 5 ein luftdurchlässiges Material verwendet wird, das sich nach Entfernen des Einfüllelements 8 von selbst wieder so verschließt, dass es auch an der betroffenen Stelle für das Füllmaterial 4 nicht durchlässig ist.

Ein solches selbstverschließendes flächiges Filtermaterial 5 ist insbesondere ein Filtermaterial mit wirr angeordneten Filtermaterialfasern. Besonders eignet sich dazu ein einlagiges oder mehrlagiges Vliesmaterial, beispielsweise ein Polyestervlies. Im Einzelnen sind im allgemeinen Teil der Beschreibung hier Beispiele erläutert worden.

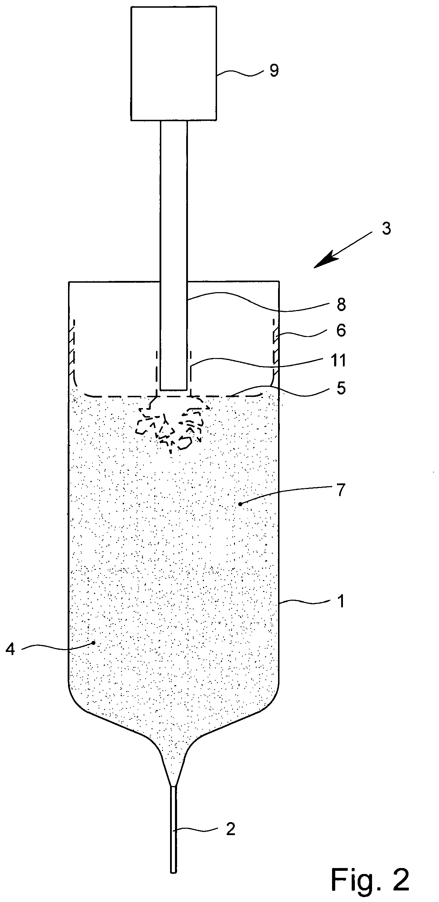

Das dargestellte und bevorzugte Ausführungsbeispiel zeigt eine Gestaltung, bei der nicht nur das flächige Filtermaterial 5 als solches selbstverschließend gestaltet ist, sondern bei dem eine Konstruktion vorgesehen ist, bei der das flächige Filtermaterial 5 mit einem sich selbst verschließenden Ventil 11, hier nach Art eines Ventilschlauchs, versehen ist. Das Durchsetzen des flächigen Filtermaterials 5 erfolgt durch das Ventil 11 hindurch. Beim Zurückziehen des Einfüllelements 8 faltet sich das schlauchartige Ventil 11 so zusammen, dass es das flächige Filtermaterial 5 an dieser Stelle von selbst wieder verschließt. Das ist in Fig. 2 schematisch dargestellt.

Ein sich selbst verschließendes Ventil 11 kann man auch beispielsweise am Verbindungsrand 6 zwischen dem flächigen Filtermaterial 5 und der Folie 1 oder Folienverbindung einbetten.

Für das Einfüllelement 8 dienen passende Gestaltungen, insbesondere abgestimmt auf das verwendete pulverartige Füllmaterial 4. Dargestellt ist ein Einfüllrohr, das vorzugsweise aus Metall bestehen kann.

Fahren wir nun bei der Darstellung des Verfahrens zur Herstellung eines VIP 3 fort. Bislang sind die Verfahrensschritte a) bis g) des Anspruchs 1 abgehandelt worden.

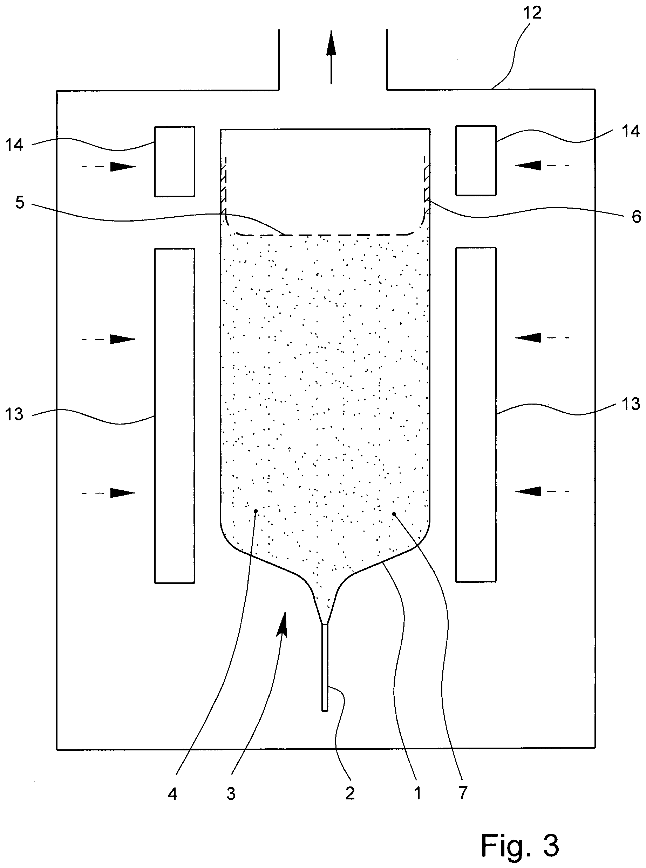

Fig. 3 zeigt nun den nächsten Verfahrensschritt. Der Verbund aus der Folie 1 oder Folienverbindung und dem flächigen Filtermaterial 5 sowie dem im Aufnahmeraum 7 befindlichen Füllmaterial 4 wird insgesamt auf einen gegenüber dem Umgebungsdruck im vorherigen Verfahrensschritt erheblich niedrigeren Druck (Vakuum) gebracht. Dabei werden von selbst der Aufnahmeraum 7 und das darin befindliche pulverartige Füllmaterial 4 durch das flächige Filtermaterial hindurch entlüftet. Praktisch werden die Zwischenräume zwischen den einzelnen Körperchen des pulverartigen Füllmaterials 4 evakuiert. Dargestellt ist eine Vakuumkammer 12, in der sich das zukünftige VIP 3 befindet. An der Vakuumkammer 12 ist oben mit einem Pfeil ein Absauganschluss angedeutet.

Wäre der entstehende VIP 3 oben an der Öffnung des Beutels, der durch die vakuumdichte Folie 1 oder Folienverbindung gebildet ist, angeschlossen und der Raum um die Folie 1 herum nicht evakuiert, so würde das Evakuieren des Beutels dazu führen, dass der Beutel von selbst zusammengepresst wird.

Das dargestellte Ausführungsbeispiel zeigt eine Variante, bei der das Zusammenpressen des durch die vakuumdichte Folie 1 aufgespannten und mit dem flächigen Filtermaterial 5 verschlossenen Beutels durch Pressbalken oder Pressstempel 13 erfolgt. Diese sind in der Vakuumkammer 12 angeordnet und pressen den Beutel in die für das VIP 3 später gewünschte Form. Das geht ohne Weiteres, weil sich im Aufnahmeraum 7 ja praktisch keine Luft mehr befindet. Deshalb kann man das Innere des Beutels auf die Rohdichte des pulverartigen Füllmaterials 4 zusammenpressen. Das alles ist in Fig. 3 schematisch gezeigt. Die Pressrichtung ist durch gestrichelte Pfeile angedeutet.

Bei weiterhin anhaltendem Vakuum wird schließlich die vakuumdichte Folie 1, also das im Entstehen befindliche VIP 3, komplett randseitig umlaufend derart fest verschlossen, dass dieser Verbindungsrand 10 für Luft nicht durchlässig und so der Aufnahmeraum 7 insgesamt luftdicht verschlossen ist.

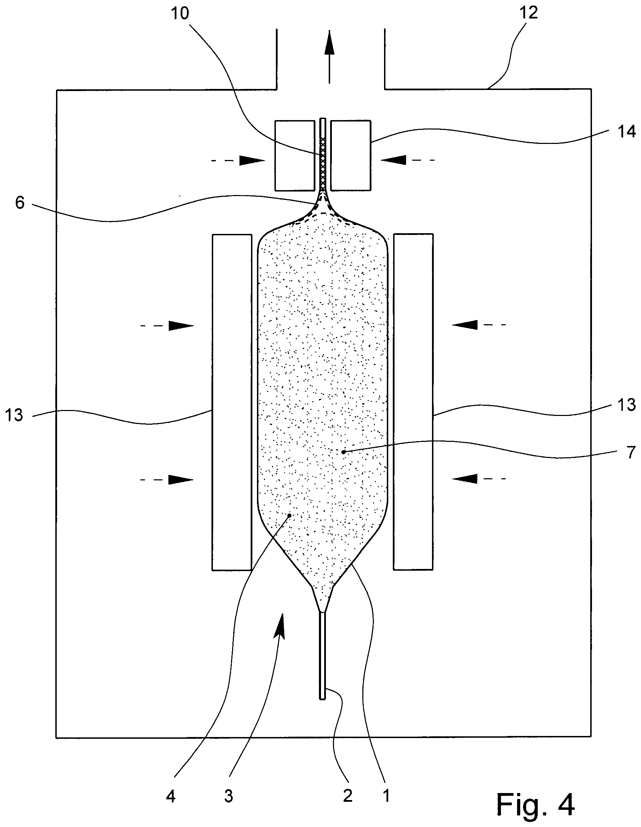

Man sieht diesen Vorgang im Übergang von Fig. 3 nach Fig. 4. Zur Herstellung des Verbindungsrandes 10 sind hier als Beispiel heiße Siegelbalken 14 angedeutet, die den Verbindungsrand 10 durch Pressung entstehen lassen und die luftdichte Verbindung der vakuumdichten Folie 1 oder Folienverbindung auf sich selbst herstellen. Damit ist das fertige VIP 3 erreicht. Es kann aus der Vakuumkammer 12 entnommen werden.

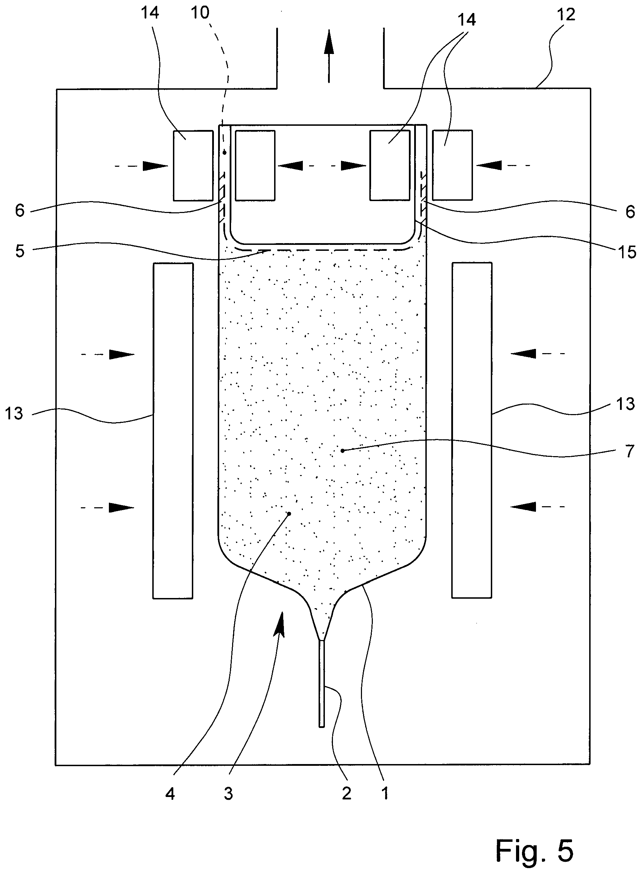

Fig. 5 zeigt ein etwas anderes Ausführungsbeispiel als Fig. 4. Während im Ausführungsbeispiel von Fig. 3/4 im Verfahrensschritt i) der Verbindungsrand 10 durch Verbinden der vakuumdichten Folie 1 mit sich selbst hergestellt wird, wird im Ausführungsbeispiel von Fig. 5 im Verfahrensschritt i) der Verbindungsrand 10 zwischen der vakuumdichten Folie 1 oder Folienverbindung einerseits und einer zweiten vakuumdichten Folie 15 oder Folienverbindung andererseits hergestellt. Dadurch lässt sich eine andere Formgebung am offenen Ende der vakuumdichten Folie 1 erreichen, man ist nicht auf das einfache "Zusammenquetschen" der vakuumdichten Folie 1 bzw. Folienverbindung selbst beschränkt. Hier sind die heißen Siegelbalken 14 vorzugsweise umlaufend angeordnet.

Fig. 3 und 4 lassen eine Besonderheit des hier dargestellten Ausführungsbeispiels des erfindungsgemäßen Verfahrens erkennen. Hier ist vorgesehen, dass der Verbindungsrand 6 im Verfahrensschritt c) ein wenig nach innen vom Außenrand der Folie 1 oder Folienverbindung beabstandet hergestellt wird und dass der Verbindungsrand 10 im Verfahrensschritt i) zumindest zu einem Teil außerhalb des im Verfahrensschritt c) hergestellten Verbindungsrandes 6 hergestellt wird. Mit dieser Maßnahme ist sichergestellt, dass der äußere Verbindungsrand 10 zwischen den beiden Flächen der vakuumdichten Folie 1 oder Folienverbindung, also zwischen den Flächen der Hochbarrierefolie oder Hochbarrierefolien (Fig. 5) unmittelbar hergestellt wird. Das gilt - hier - jedenfalls für den äußeren Teil dieses Verbindungsrandes 10. Damit ist sichergestellt, dass nicht versehentlich das flächige Filtermaterial 5, das häufig auch bei größerer Materiallänge noch in gewissem Maße luftdurchlässig ist, im Verbindungsrand 10 liegt. Wie im allgemeinen Teil der Beschreibung bereits ausgeführt worden ist, ist diese Verfahrensweise beispielsweise bei einem PET-Vliesmaterial empfehlenswert.

In Fig. 4 sieht man den Verbindungsrand 10, der durch das thermische Verschweißen mittels der heißen Siegelbalken 14 hergestellt wird, während der Verbindungsrand in Fig. 5 nur strichpunktiert in seiner Lage angedeutet ist, weil er dort durch die Siegelbalken 14 noch nicht hergestellt worden ist.

Handelt es sich bei dem flächigen Filtermaterial 5 um ein Material, das, insbesondere bei thermischem Verschweißen oder Ultraschallverschweißen, selbst komplett luftdicht wird, so kann man es auch riskieren, dass der Verbindungsrand 10 im Verfahrensschritt i) auf dem im Verfahrensschritt c) hergestellten Verbindungsrand 6 hergestellt wird. Wie im allgemeinen Teil der Beschreibung bereits angesprochen worden ist, kann man beispielsweise bei PE- oder PP-Vliesmaterial in dieser Weise verfahren.

Anstelle der dargestellten thermischen Siegelbalken 14 lassen sich auch gesteuerte, punktuelle Siegelwerkzeuge oder andere entsprechende Verschlusswerkzeuge verwenden. Insbesondere kommt auch ein Ultraschall-System in Frage.

Für die Bereitstellung der vakuumdichten Folie 1 oder Folienverbindung einerseits und des flächigen Filtermaterials 5 andererseits kann man zunächst vorsehen, dass diese in einer für das herzustellende VIP 3 passenden Größe bereitgestellt werden. Als Alternative und bevorzugt wird allerdings wohl eher vorgesehen, dass sowohl die vakuumdichte Folie 1 oder Folienverbindung als auch das flächige Filtermaterial 5 als Rollenware bereitgestellt und kontinuierlich verarbeitet werden.

Für die Anbringung der Siegelnähte darf auf den allgemeinen Teil der Beschreibung hingewiesen werden. Insbesondere kann bei größeren, von der Rolle verarbeiteten Folien 1 mit umlaufenden Siegelnähten gearbeitet werden, die nicht Endnähte sind.

Um eine zweckmäßige und effektive Befüllung des Aufnahmeraums 7 beim Verfahren zur Herstellung eines VIP 3 zu gewährleisten, empfiehlt sich in besonderer Weise ein Verfahren, bei dem das pulverartige Füllmaterial 4 in einem Vorratssilo oder großen Vorratsbeutel in einer ersten, mittleren Dichte vorliegt, während des Einfüllens in den Aufnahmeraum 7 in eine zweite, niedrigere Dichte gebracht wird und nach dem Einfüllen in den Aufnahmeraum 7 durch Evakuieren und/oder durch mechanisches Zusammenpressen auf eine erheblich über der ersten Dichte liegende dritte Dichte komprimiert wird, wobei, vorzugsweise, die zweite Dichte etwa ¾ bis % der ersten Dichte, vorzugsweise etwa ½ der ersten Dichte, beträgt.

## Patentansprüche

1. Verfahren zur Herstellung eines Vakuumisolationskörpers / Vakuumisolationspaneels / VIP mit folgenden Verfahrensschritten:
a) Eine vakuumdichte Folie (1) oder Folienverbindung wird bereitgestellt.
b) Ein für Luft durchlässiges, aber für ein pulverartiges Füllmaterial (4) nicht durchlässiges flächiges Filtermaterial (5) wird bereitgestellt.
c) Das flächige Filtermaterial (5) wird mit der vakuumdichten Folie (1) oder Folienverbindung randseitig derart fest verbunden, dass der Verbindungsrand (6) zwischen dem flächigen Filtermaterial (5) und der vakuumdichten Folie (1) oder Folienverbindung jedenfalls für das pulverartige Füllmaterial (4) nicht durchlässig ist.
d) Die vakuumdichte Folie (1) oder Folienverbindung einerseits und das flächige Filtermaterial (5) andererseits werden so angeordnet, dass sich dazwischen ein mit Füllmaterial (4) füllbarer, nach außen abgeschlossener Aufnahmeraum (7) ergibt.
e) Das flächige Filtermaterial (5) wird mittels eines Einfüllelements (8) einer Füllvorrichtung (9) für das pulverartige Füllmaterial (4) durchsetzt.
f) Bei hohem Umgebungsdruck, insbesondere also bei normalem Atmosphärendruck, wird eine gewünschte Menge an pulverartigem Füllmaterial (4) durch das Einfüllelement (8) vorzugsweise unter einem gegenüber dem Umgebungsdruck höheren Einfülldruck in den Aufnahmeraum (7) eingefüllt.
g) Nach Abschluss des Befüllens des Aufnahmeraums (7) wird das Einfüllelement (8) aus dem flächigen Filtermaterial (5) entfernt und das flächige Filtermaterial (5) wird an der betroffenen Stelle wieder geschlossen.
h) Der Verbund aus der vakuumdichten Folie (1) oder Folienverbindung und dem flächigen Filtermaterial (5) sowie dem im Aufnahmeraum (7) befindlichen Füllmaterial (4) wird insgesamt auf einen gegenüber dem Umgebungsdruck im Verfahrensschritt f) erheblich niedrigeren Druck (Vakuum) gebracht und dabei werden der Aufnahmeraum (7) und das darin befindliche pulverartige Füllmaterial (4) durch das flächige Filtermaterial (5) hindurch entlüftet.
i) Bei weiterhin anhaltendem Vakuum wird die vakuumdichte Folie (1) oder Folienverbindung komplett randseitig umlaufend derart fest verschlossen, dass dieser Verbindungsrand (10) für Luft nicht durchlässig und so der Aufnahmeraum (7) insgesamt luftdicht verschlossen ist.

2. Verfahren nach Anspruch 1, **dadurch gekennzeichnet,**
**dass** als flächiges Filtermaterial (5) ein luftdurchlässiges Material verwendet wird, das sich nach Entfernen des Einfüllelements (8) von selbst wieder so verschließt, dass es auch an der betroffenen Stelle für das Füllmaterial (4) nicht durchlässig ist.

3. Verfahren nach Anspruch 1 oder 2, **dadurch gekennzeichnet,**
**dass** als flächiges Filtermaterial (5) ein einlagiges oder mehrlagiges Vliesmaterial verwendet wird.

4. Verfahren nach einem der Ansprüche 1 bis 3, **dadurch gekennzeichnet,**
**dass** das flächige Filtermaterial (5) oder der Verbindungsrand (6) zwischen dem flächigen Filtermaterial (5) und der vakuumdichten Folie (1) oder Folienverbindung mit einem sich selbst verschließenden Ventil (11) versehen wird und das Durchsetzen des flächigen Filtermaterials (5) im Verfahrensschritt e) mittels des Ventils (11) bzw. durch das Ventil (11) hindurch erfolgt.

5. Verfahren nach einem der Ansprüche 1 bis 4, **dadurch gekennzeichnet dass** als Einfüllelement (8) ein Einfüllrohr, vorzugsweise ein Einfüllrohr aus Metall, verwendet wird.

6. Verfahren nach einem der Ansprüche 1 bis 5, **dadurch gekennzeichnet,**
**dass** sowohl die vakuumdichte Folie (1) oder Folienverbindung als auch das flächige Filtermaterial (5) jeweils in einer für das herzustellende VIP (3) passenden Größe bereitgestellt wird oder
**dass** sowohl die vakuumdichte Folie (1) oder Folienverbindung als auch das flächige Filtermaterial (5) als Rollenware bereitgestellt und kontinuierlich verarbeitet werden.

7. Verfahren nach einem der Ansprüche 1 bis 6, **dadurch gekennzeichnet,**
**dass** im Verfahrensschritt i) der Verbindungsrand (10) durch Verbinden der vakuumdichten Folie (1) oder Folienverbindung mit sich selbst hergestellt wird oder dass im Verfahrensschritt i) der Verbindungsrand (10) zwischen der vakuumdichten Folie (1) oder Folienverbindung und einer zweiten vakuumdichten Folie (15) oder Folienverbindung hergestellt wird.

8. Verfahren nach einem der Ansprüche 1 bis 7, **dadurch gekennzeichnet,**
**dass** der Verbindungsrand (6) im Verfahrensschritt c) ein wenig nach innen vom Außenrand der Folie (1) oder Folienverbindung beabstandet hergestellt wird und dass der Verbindungsrand (10) im Verfahrensschritt i) zumindest zu einem Teil außerhalb des im Verfahrensschritt c) hergestellten Verbindungsrandes (6) hergestellt wird.

9. Verfahren nach einem der Ansprüche 1 bis 7, **dadurch gekennzeichnet,**
**dass** der Verbindungsrand (10) im Verfahrensschritt i) auf dem im Verfahrensschritt c) hergestellten Verbindungsrand (6) hergestellt wird.

10. Verfahren nach einem der Ansprüche 1 bis 9, **dadurch gekennzeichnet,**
**dass** zumindest die Verfahrensschritte h) und i) in einer Vakuumkammer (12) durchgeführt werden.

11. Verfahren nach einem der Ansprüche 1 bis 10, **dadurch gekennzeichnet,**
**dass** das pulverartige Füllmaterial (4)
in einem Vorratssilo oder großen Vorratsbeutel in einer ersten, mittleren Dichte vorliegt,
während des Einfüllens in den Aufnahmeraum (7) in eine zweite, niedrigere Dichte gebracht wird und
nach dem Einfüllen in den Aufnahmeraum (7) durch Evakuieren und/oder durch mechanisches Zusammenpressen auf eine erheblich über der ersten Dichte liegende dritte Dichte komprimiert wird,
wobei, vorzugsweise, die zweite Dichte etwa ¾ bis ¼ der ersten Dichte, vorzugsweise etwa ½ der ersten Dichte, beträgt.

## Claims

1. Method for producing a vacuum insulating body/vacuum insulation panel/VIP with the following method steps:
a) A vacuum-tight film (1) or film connection is provided.
b) A flat filter material (5) that is permeable to air but not permeable to a powder-like filling material (4) is provided.
c) The flat filter material (5) is firmly connected to the vacuum-tight film (1) or film connection at the edges in such a way that the connecting edge (6) between the flat filter material (5) and the vacuum-tight film (1) or film connection is in any case not permeable to the powder-like filling material (4).
d) The vacuum-tight film (1) or film connection on the one hand and the flat filter material (5) on the other hand are arranged in such a way that a receiving space (7) that can be filled with filling material (4) and is closed off with respect to the outside is obtained in between.
e) The flat filter material (5) is passed through by means of a filling element (8) of a filling device (9) for the powder-like filling material (4).
f) With high ambient pressure, in particular therefore under normal atmospheric pressure, a desired amount of powder-like filling material (4) is filled into the receiving space (7) through the filling element (8), preferably under a filling pressure that is higher than the ambient pressure.
g) After completion of the filling of the receiving space (7), the filling element (8) is removed from the flat filter material (5) and the flat filter material (5) is closed again at the location concerned.
h) The composite comprising the vacuum-tight film (1) or film connection and the flat filter material (5) and also the filling material (4) located in the receiving space (7) as a whole is brought to a pressure that is considerably lower than the ambient pressure in method step f) (vacuum) and the receiving space (7) and the powder-like filling material (4) located therein are thereby vented through the flat filter material (5),
i) With a sustained vacuum, the vacuum-tight film (1) or film connection is firmly sealed completely around the edges in such a way that this connecting edge (10) is not permeable to air, and thus the receiving space (7) as a whole is sealed in an air-tight manner.

2. Method according to Claim 1, **characterized in that** an air-permeable material that re-seals itself after removal of the filling element (8) in such a way that it is impermeable to the filling material (4) also at the location concerned is used as the flat filter material (5).

3. Method according to Claim 1 or 2, **characterized in that** a single-layer or multi-layer nonwoven material is used as the flat filter material (5).

4. Method according to one of Claims 1 to 3, **characterized**
**in that** the flat filter material (5) or the connecting edge (6) between the flat filter material (5) and the vacuum-tight film (1) or film connection is provided with a self-sealing valve (11) and the passing through of the flat filter material (5) in method step e) takes place by means of the valve (11) or through the valve (11).

5. Method according to one of Claims 1 to 4, **characterized**
**in that** a filling tube, preferably a filling tube of metal, is used as the filling element (8).

6. Method according to one of Claims 1 to 5, **characterized**
**in that** both the vacuum-tight film (1) or film connection and the flat filter material (5) is provided in each case in a size suitable for the vacuum insulation panel VIP (3) to be produced or
**in that** both the vacuum-tight film (1) or film connection and the flat filter material (5) are provided as roll material and are processed continuously.

7. Method according to one of Claims 1 to 6, **characterized**
**in that** in method step i) the connecting edge (10) is produced by connecting the vacuum-tight film (1) or film connection to itself or
**in that** in method step i) the connecting edge (10) is produced between the vacuum-tight film (1) or film connection and a second vacuum-tight film (15) or film connection.

8. Method according to one of Claims 1 to 7, **characterized**
**in that** the connecting edge (6) in method step c) is produced a small distance inward from the outer edge of the film (1) or film connection and in that the connecting edge (10) in method step i) is at least partly produced outside the connecting edge (6) produced in method step c).

9. Method according to one of Claims 1 to 7, **characterized**
**in that** the connecting edge (10) in method step i) is produced on the connecting edge (6) produced in method step c).

10. Method according to one of Claims 1 to 9, **characterized**
**in that** at least method steps h) and i) are carried out in a vacuum chamber (12).

11. Method according to one of Claims 1 to 10, **characterized**
**in that** the powder-like filling material (4) in a storage silo or large storage bag is at a first, medium density,
during the filling into the receiving space (7) is brought to a second, lower density and
after the filling into the receiving space (7) is compressed by evacuation and/or by mechanical pressing together to a third density that lies considerably above the first density,
the second density preferably being approximately ¾ to ¼ of the first density, preferably approximately ½ of the first density.

## Revendications

1. Procédé de fabrication d'un corps isolant sous vide, d'un panneau isolant sous vide/VIP, le procédé présentant les étapes suivantes :
a) un film (1) ou un composite de film étanche sous vide est préparé,
b) un matériau plat de filtre (5) perméable à l'air mais non perméable à un matériau poudreux de charge (4) est préparé,
c) le matériau plat de filtre (5) est relié solidairement par son bord au film (1) ou au composite de film étanche sous vide de telle sorte que le bord de liaison (6) entre le matériau plat de filtre (5) et le film (1) ou le composite de film étanche sous vide ne soient pas perméables en tout cas vis-à-vis du matériau poudreux de charge (4),
d) le film (1) ou le composite de film étanche sous vide, d'une part, et le matériau plat de filtre (5), d'autre part, sont disposés de manière à obtenir entre eux un espace de réception (7) apte à être rempli par le matériau de charge (4) et fermé vis-à-vis de l'extérieur,
e) le matériau plat de filtre (5) est percé au moyen d'un élément de remplissage (8) d'un ensemble de remplissage (9) pour le matériau poudreux de charge (4),
f) à une pression ambiante élevée et donc en particulier à une pression atmosphérique normale, la quantité souhaitée de matériau poudreux de charge (4) est introduite par l'élément de remplissage (8) dans l'espace de réception (7), de préférence à une pression de remplissage plus élevée que la pression ambiante,
g) lorsque le remplissage de l'espace de réception (7) est terminé, l'élément de remplissage (8) est enlevé du matériau plat de filtre (5) et le matériau plat de filtre (5) est refermé à l'emplacement concerné,
h) l'ensemble constitué du film (1) ou du composite de film étanche sous vide et du matériau plat de filtre (5) ainsi que du matériau de remplissage (4) présent dans l'espace de réception (7) est amené globalement à une pression considérablement plus basse (vide) que la pression ambiante qui règne à l'étape f) du procédé et l'espace de réception (7) et le matériau poudreux de charge (4) qui s'y trouve est évacué de son air à travers le matériau plat de filtre (5) et
i) lorsque le vide est maintenu, le film (1) ou le composite de film étanche sous vide sont fermés complètement sur leur périphérie de telle sorte que ce bord de liaison (10) ne soit plus perméable à l'air et que l'espace de réception (7) soit ainsi fermé globalement de manière étanche à l'air.

2. Procédé selon la revendication 1, **caractérisé en ce qu'**il utilise comme matériau plat de filtre (5) un matériau perméable à l'air qui se referme automatiquement après l'enlèvement de l'élément de remplissage (8) et **en ce qu'**il n'est pas perméable au matériau de charge (4) à l'emplacement concerné.

3. Procédé selon les revendications 1 ou 2, **caractérisé en ce qu'**il utilise comme matériau plat de filtre (5) un matériau de feutre en une ou plusieurs couches.

4. Procédé selon l'une des revendications 1 à 3, **caractérisé en ce que** le matériau plat de filtre (5) ou le bord de liaison (6) entre le matériau plat de filtre (5) et le film (1) ou le composite de film étanche sous vide sont dotés d'une soupape (11) se fermant automatiquement et **en ce que** la traversée du matériau plat de filtre (5) à l'étape e) du procédé s'effectue au moyen de la soupape (11) ou à travers la soupape (11).

5. Procédé selon l'une des revendications 1 à 4, **caractérisé en ce qu'**il utilise comme élément de remplissage (8) un tube de remplissage et de préférence un tube de remplissage en métal.

6. Procédé selon l'une des revendications 1 à 5, **caractérisé en ce que** tant le film (1) ou le composite de film étanche sous vide que le matériau plat de filtre (5) sont réalisés à une taille adaptée au VIP (3) à réaliser ou **en ce que** tant le film (1) ou le composite de film étanche sous vide que le matériau plat de filtre (5) sont réalisés sous la forme d'un matériau en rouleau et traité en continu.

7. Procédé selon l'une des revendications 1 à 6, **caractérisé en ce qu'**à l'étape i) du procédé, le bord de liaison (10) est réalisé par liaison du film (1) ou du composite de film étanche sous vide avec lui-même ou en ce qu'à l'étape i) du procédé, le bord de liaison (10) est réalisé entre le film (1) ou le composite de film étanche sous vide et un deuxième film (15) ou composite de film étanche sous vide.

8. Procédé selon l'une des revendications 1 à 7, **caractérisé en ce qu'**à l'étape c) du procédé, le bord de liaison (6) est réalisé à une petite distance vers l'intérieur depuis le bord extérieur du film (1) ou du composite de film étanche au vide et **en ce qu'**à l'étape i) du procédé, le bord de liaison (10) est réalisé au moins en partie à l'extérieur du bord de liaison (6) réalisé à l'étape de traitement c).

9. Procédé selon l'une des revendications 1 à 7, **caractérisé en ce qu'**à l'étape i) du procédé, le bord de liaison (10) est réalisé sur le bord de liaison (6) formé à l'étape c) du procédé.

10. Procédé selon l'une des revendications 1 à 9, **caractérisé en ce qu'**au moins les étapes h) et i) du procédé sont exécutées dans une chambre (12) sous vide.

11. Procédé selon l'une des revendications 1 à 10, **caractérisé en ce que** le matériau poudreux de charge (4) est prévu à une première densité moyenne dans un silo de réserve ou un grand sac de réserve, **en ce qu'**il est amené à une deuxième densité plus basse pendant le remplissage de l'espace de réception (7), **en ce qu'**après le remplissage de l'espace de réception (7), il est comprimé à une troisième densité située considérablement au-dessus de la première densité, par mise sous vide et/ou par compression mécanique et **en ce que** la deuxième densité représente de préférence environ 3/4 à 1/4 de la première densité et de préférence environ 1/2 de la première densité.
